## Europäisches Patentamt
## European Patent Office
## Office européen des brevets

(11) Publication number: **0 071 588**
**A2**

# EUROPEAN PATENT APPLICATION

(21) Application number: **82830216.6**

(22) Date of filing: **28.07.82**

(51) Int. Cl.³: **F 02 D 19/02**

(30) Priority: **31.07.81 IT 349781**

(43) Date of publication of application:
**09.02.83 Bulletin 83/6**

(84) Designated Contracting States:
**AT BE CH DE FR GB LI LU NL SE**

(71) Applicant: **O.M.T. OFFICINA MECCANICA TARTARINI S.p.A.**
**Via Paolo Fabbri, 1**
**I-40013 Castelmaggiore (Bologna)(IT)**

(72) Inventor: **Tartarini, Aleardo**
**Via Masi, 182**
**I-40137 Bologna(IT)**

(74) Representative: **Lanzoni, Luciano**
**c/o BUGNION S.p.A. Via Farini, 37**
**I-40124 Bologna(IT)**

(54) **An apparatus for forming a mixture of air and gaseous fuel, and for checking and regulating the air-fuel ratio of the said mixture.**

(57) The apparatus comprises a pipe 4 and a duct 9, both of which terminate at a channel 20 in communication with the Induction manifold of an internal combustion engine. Gaseous fuel V passes through the pipe 4 and air F through the duct 9. A constant check on the flow rate of the said fluids is made by electrical devices 6a-6b and 10a-10b wired to an electronic logic group 15.

Placed in series with the said pipe 4, upstream of the devices 6a-6b that measure the flow rate of the fuel, there is an electrovalve 5 integral with the armature 5b of a solenoid 5a. Between the limit closing configuration C and the limit opening configuration A, the electrovalve 5 adopts a plurality of working configurations L whereby the delivery value of the gaseous fuel V passing through the port S of the aforementioned electrovalve can be varied.

The solenoid 5a is energized by the aforementioned electronic logic group 15 by means of variable frequency unidirectional impulses in such a way as to obtain an equivalence between the true mixing ratio and that programmed by the said group.

./...

FIG1

An apparatus for forming a mixture of air and gaseous
fuel, and for checking and regulating the air-fuel ratio
of the said mixture

As is known, for the air-fuel mixture in engines that employ gaseous fuels (for example, gaseous fuels produced
by vaporizing liquefied petroleum gases) the use is envisaged of a suitable mixing device at which the duct
supplying the air and the pipe supplying the gaseous fuel
terminate, and from which the channel that carries the
mixture towards the cylinders extends.   The carburettor
is placed in series with the said channel in cases when
the engine can be powered either by petrol or by liquefied petroleum gas.

With internal combustion engines that utilize the above
mentioned gaseous fuels, optimal operation as regards the
power and torque delivered and the specific consumption,
is achieved by maintaining constant a predetermined value
of the mixing ratio (the ratio in weight between the gaseous fuel and the air present in the mixture) as the
speed of the driving shaft varies.

Known mixing devices do not maintain the said mixing ratio
constant because of the fact that the flow of air is dependent, in accordance with a certain coefficient, on the
vacuum value created in a constriction (known as a Venturi tube) with which the said mixing devices are provided,
while the flow of vaporized fuel is dependent on the said
vacuum in accordance with a different coefficient.

In consequence of the foregoing, the mixing ratio does
not remain constant as the said vacuum (which depends directly on the vacuum that is created in the region of the
throttle valve of the carburettor or, in other words, on
the number of revolutions of the driving shaft) varies,
and thus an optimal mixing ratio can only be obtained when the driving shaft is revolving at a certain speed, with all the problems this entails.

The regulating means, provided in known mixing devices, can only operate when the vehicle is at a standstill and they allow solely an adjustment to be made to the optimization of the said mixing ratio at a speed preset to suit the performance, at the said speed, it is wished to get the engine in question to yield.

The main object of the invention is to make available an apparatus for forming a mixture of air and gaseous fuel, the structure of which differs distinctly from the methods of construction adopted for the mixing devices known, and also for supplying the said mixture at a mixing ratio corresponding to the theoretical value required by the engine in every one of its operating conditions.

The aforementioned object is, according to the invention, achieved with an apparatus for forming a mixture of air and gaseous fuel, and for checking and regulating the air-fuel ratio of the said mixture, of the type that is connected to a source of supply of the said gaseous fuel and to an internal combustion engine supplied with the said mixture via a channel in which is created a vacuum consequential to the operation of means for regulating the speed of the driving shaft of the said engine, the said apparatus comprising : at least one pipe that links the aforementioned source to the said channel; an electrovalve placed along the said pipe and able to adopt, between the limit closing and opening configurations, a plurality of working configurations; first electrical devices for measuring the flow rate of the gaseous fuel passing through the said pipe, positioned along the latter downstream with respect to the said electrovalve; at least one air supply duct that terminates at the said channel; second electrical devices for measuring the flow rate of the air passing through the duct; and an electronic logic group, connected electrically to the said first and second electrical devices, suitable for measuring the flow rate of the air and of the gaseous fuel and of processing the said readings in a functional relationship with values programmed for the air-fuel mixing ratio, the said group being destined to energize the said solenoid by means of variable frequency unidirectional impulses in order to obtain uniformity between the true mixing ratio of the mixture passing through the said channel and the mixing ratio programmed with the said group.

It can be seen from the foregoing that when the said mixing ratio is optimal (whereby complete and perfect combustion of the gaseous fuel be possible), the performance of the engine is, irrespective of variations in the tolerance of the mechanical components of the apparatus and of variations, as time goes by, in the physical-chemical characteristics of the fuel and air, correspondingly optimal.

The said ratio can be established without taking consumption minimization into consideration, compatibly with the particular performance it is wished the engine to yield. If a higher performance is required, use is made for measuring the speed at which the driving shaft of the said internal combustion engine rotates, of third electrical devices connected electrically to the said electronic logic group, the latter energizing the said solenoid, by means of variable frequency unidirectional impulses, in order to obtain a pre-established functional relationship between the mixing ratio and the number of revolutions of the driving shaft of the said internal combustion engine.

The characteristics of the invention are made apparent in the description that follows, with reference to the accompanying table of drawings, in which :

- Figure 1 shows, in a possible block diagram, the apparatus according to the invention;
- Figure 2 shows, in an enlarged scale, the detail 5 in Figure 1, with the electrovalve in certain working configurations.

With reference to the above listed figures, at 1 has been shown a tank for liquefied gas (for example, liquefied petroleum gas) connected, via a pipe 3, to a pressure reducing valve-vaporizer 2 of a known type.

The outgoing vaporized fuel from the pressure reducing valve 2 is sent, via a pipe 4, into a channel 20 which, in the case illustrated, terminates at a carburettor 12 of a known type (suitable for both liquefied petroleum gas and petrol operation of the non-illustrated internal combustion engine to which the apparatus forming the subject of the invention is connected).

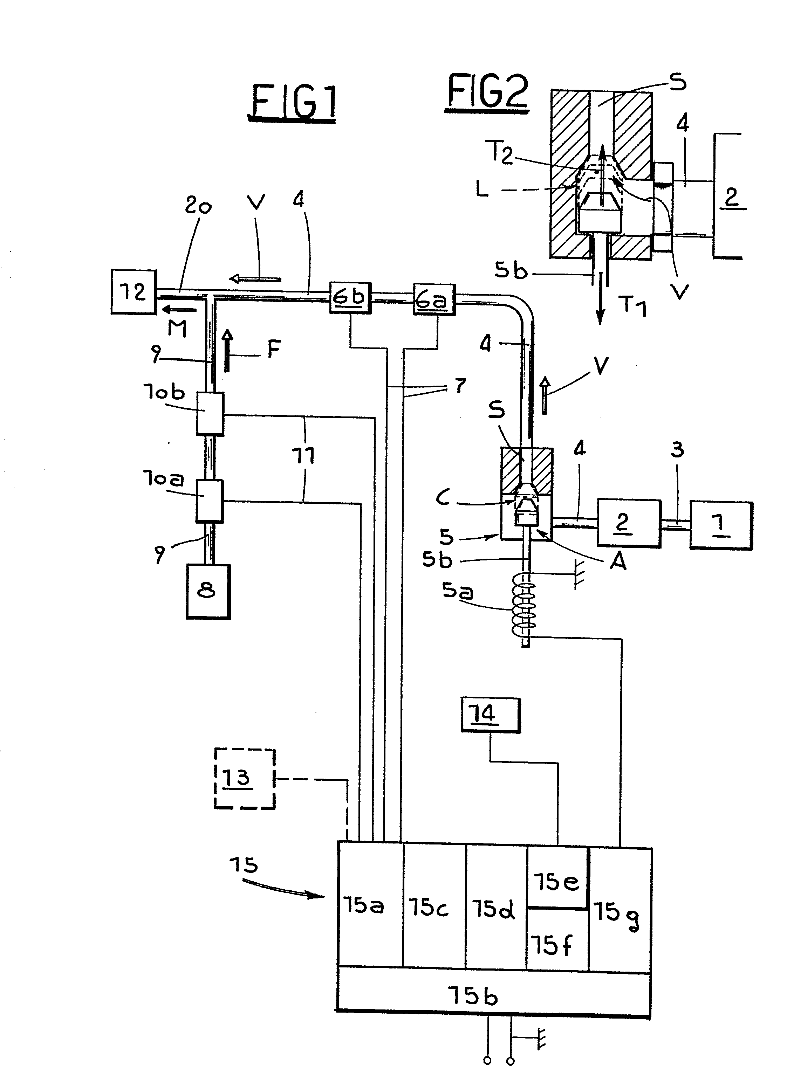

Following on after the pressure reducing valve 2, in series with the pipe 4, there is first of all an electrovalve 5 and then two electrical sensors 6a and 6b whose output terminals 7 are destined to supply electrical signals proportional to the rate and to the temperature, respectively, of the flow V of gaseous fuel passing through the said pipe 4. The presence is justified of the sensor 6b since the sensor 6a is utilized in this particular form of embodiment to measure the flow rate in an indirect way, that is to say, on the basis of the quantity of heat that the flow V removes from an electrical sensor of a known type, the temperature of which is maintained constant. Because the temperature of the flow V is not constant, it is necessary for the sensor 6b to take this into account so that it can correct the reading taken by the sensor 6a. Between the limit closing configuration C and the limit opening configuration A, the valve 5 adopts a plurality of working configurat- ions L (Figure 2) such as to vary the value of the flow of gaseous fuel passing there through and along the pipe 4.

At 9 has been shown a duct, one extremity of which is provided with an air purifier 8 of a known type, while the other terminates at the channel 20. Provided in series with the duct 9 there are two electrical sensors 10a and 10b whose output terminals 11 are destined to supply electrical signals proportional to the rate and to the temperature, respectively, of the flow F of air passing through the said duct 9. The function of the sensor 10b is the same as that of the previously mentioned sensor 6b.

An electronic logic group has been shown at 15 and this is constituted by various sections numbered 15a, 15b, 15c, 15d, 15e, 15f and 15g. The section 15b has the task of supplying the other sections.

The function of the section 15a, to which are wired the electrical terminals 7 and 11, is to effect the measurements (through corresponding analogue signals) of the mass rate of the aforementioned flows V and A. The said analogue signals are converted into corresponding digital signals by the analogue-digital conversion section 15c, and are then passed on to the digital logic analysis section 15d.

The section 15d processes, in accordance with the programmes inserted therein, in which are pre-established the values of the mixing ratio it is wished to obtain at the time the engine is started up and when it is running at various different speeds, the digital signals coming from the section 15c and, on the basis of the said processing operation, supplies information (signals) to the negative feedback section 15f.

Based on the information received, the section 15f operates the power section 15g whose final actuator is constituted by a solenoid 5a.

The section 15c works in conjunction with the section 15e that is destined to decode data intended, for example, to be set out on a display device 14 of a known type.

The solenoid 5a is fed with unidirectional signals, not necessarily constant in amplitude, at variable frequencies; in other words, the solenoid 5a is energized with impulses, the amplitude of which can vary as a consequence of external causes (for example: a variation in the battery supply voltage) but the frequency of which is regulated by the section 15f in accordance with what has been outlined above.

As is known, by varying the supply voltage frequency of a solenoid a resulting variation is made in the flow relevant thereto, and this involves a regulation of the force $T_1$ with which the armature 5b is attracted by the solenoid 5a.

A description will now be given of how the apparatus forming the subject of the invention operates.

As stated above, the mixing ratio it is wished to obtain at the various speeds of the engine, particularly at the time it is being started up, is pre-established in the programme inserted in the section 15d. In the present context, the term "started up" is meant to imply a predetermined period of time that follows the ignition phase.

The ignition of the engine (with the simultaneous operation of the section 15b) is accompanied by the formation of a vacuum in the channel 20 (which, as is known, is dependent on the opening degree of the throttle valve of the carburettor 12) and this induces a flow F of air and
a flow V of gaseous fuel (since immediately the engine
fires, the armature 5b moves away, though only slightly,
from the closing configuration C).

The task of the apparatus in question consists, as already stated several times, in obtaining a pre-established
air-fuel mixing ratio for the mixture present in the channel 20.   Since, in this particular case, no control exists as regards the delivery of air (flow F), steps are
taken to regulate the delivery of fuel (flow V).   This
is achieved by controlling the passage area defined by
the valve 5 which, between the two limit configurations
C and A, namely the closing and maximum opening configuration, adopts a plurality of working configurations L in
respect of the passage area S of the flow V.

In each configuration L, the armature 5b is kept in balance since it is subjected to the force $T_1$ (influenced
by external electrical factors but adjustable through variations in the supply voltage frequency of the solenoid
5a), and to a force $T_2$ (identical but in the opposite di-
rection to $T_1$) due to the thrust that the flow V exerts
on the said valve as the said flow transits across the
passage area S.

Should there be a dissimilarity between the true ratio
of the mixture (flow M) and that programmed, consequential information is supplied to the section 15f by the section 15d.   In this way, the frequency of the solenoid 5a
is varied so that the armature 5b be carried into a fresh
configuration of balance L such that the delivery of fuel
(flow V) can return the mixing ratio to the programmed
value.

From the foregoing it thus ensues that, except for anomalous conditions of operation (for example:   starting up, acceleration and deceleration etcetera) it is possible with the apparatus in question to maintain the mixing ratio constant independently both of the number of revolutions and of any external disturbing cause of :
a physical-chemical nature, as regards the air and the fuel - of a mechanical nature, as regards the components of the apparatus - and of an electrical nature, as regards, for example, the supplying of the electronic logic group 15.

The choice of the said ratio is either a function of consumption minimization or of the particular performance (of a sports nature) it is wished the engine to yield.

For the purpose of achieving a higher performance, it is possible to provide the section 15d with a programme that defines a pre-established functional relationship between the mixing ratio and the number of revolutions of the engine : this involves the provision of a transducer 13 (depicted in dashes and connected to the section 15a) destined to supply an electrical signal for measuring the speed of the said engine.

The display device 14 illustrated in Figure 1 (for example: of the seven segment type) is destined to show a reading of the consumption of fuel, a reading of the fuel level in the tank 1, a reading of the battery charging voltage, a reading of the speed of the driving shaft, and indications pertaining to consumptions and the distance covered etcetera, or singly any one of the foregoing.

The apparatus in question, in addition to the prior listed advantages, allows the construction of the pressure reducing valve-vaporizer 2 to be simplified and, furthermore, is suitable for the full range of motor vehicles and stationary engines marketed at the present time.

A further advantage of the apparatus is that no calibration is needed should one or more component parts have to be replaced.

It is understood that the above description has been given purely as an unlimited example and thus that all possible constructional detail variations (for example: the measurement of the delivery rate of the flows V and F can be effected with one single sensor instead of with a pair of sensors) fall within the technical solution as described above and claimed hereinafter.

Claims:

1. An apparatus for forming a mixture of air and gaseous fuel, and for checking and regulating the air-fuel ratio of the said mixture, of the type that is connected to a source of supply of the said gaseous fuel and to an internal combustion engine supplied with the said mixture via a channel in which is created a vacuum consequential to the operation of means for regulating the speed of the driving shaft of the said engine, characterized by the fact that it comprises : at least one pipe 4 that links the aforementioned source 2 to the said channel 20; an electrovalve 5 placed along the said pipe 4 and able to adopt, between the limit closing configuration C and the limit opening configuration A, a plurality of working configurations L; first electrical devices 6a-6b for measuring the flow rate of the gaseous fuel V passing through the said pipe 4, positioned along the latter downstream with respect to the said electrovalve 5; at least one duct 9 for the supply of air F terminating at the said channel 20; second electrical devices 10a-10b for measuring the flow rate of the air F passing through the duct 9; and an electronic logic group 15, connected electrically to the said first electrical devices 6a-6b and to the said second electrical devices 10a-10b, suitable for measuring the flow rate of the air and of the gaseous fuel and for processing the said readings in a functional relationship with values programmed for the air-gaseous fuel mixing ratio; the said group 15 being destined to energize the solenoid 5a of the electrovalve 5 by means of variable frequency unidirectional impulses in order to obtain uniformity between the true mixing ratio of the mixture passing through the said channel 20 and the mixing ratio programmed with the said group 15.

2. An apparatus according to the preceding claim, wherein provision is made for third electrical devices 13 for measuring the speed at which the driving shaft of the internal combustion engine rotates, connected electrically to the said electronic logic group 15, the latter energizing the said solenoid 5a by means of variable frequency unidirectional impulses in order to obtain a pre-established functional relationship between the mixing ratio and the number of revolutions of the driving shaft of the said internal combustion engine.